# EUROPÄISCHE PATENTSCHRIFT

(11) **EP 1 948 472 B1**
(45) Veröffentlichungstag und Bekanntmachung des Hinweises auf die Patenterteilung: **19.05.2010**
(21) Anmeldenummer: 06828916.4
(22) Anmeldetag: 03.11.2006
(51) Int. Cl.: B60N 2/225

(54) **BESCHLAG FÜR EINEN FAHRZEUGSITZ**
FITTING FOR A VEHICLE SEAT
FERRURE POUR SIEGE DE VEHICULE

(30) Priorität: 16.11.2005 DE 102005054489
(43) Veröffentlichungstag der Anmeldung: 30.07.2008
(73) Patentinhaber: KEIPER GmbH & Co. KG, 67657 Kaiserslautern (DE)
(72) Erfinder: VOSS, Heinz, 51375 Leverkusen (DE); LEHMANN, Ulrich, 53347 Alfter (DE); SCHOLZ, Grit, 42853 Remscheid (DE)
(74) Vertreter: Patentanwälte Hosenthien-Held und Dr. Held
(86) Internationale Anmeldenummer: PCT/EP2006/010551
(87) Internationale Veröffentlichungsnummer: WO 2007/057105

(56) Entgegenhaltungen:
- DE-A1- 10 144 840
- DE-A1- 19 729 562
- DE-A1- 19 938 666
- US-A1- 2001 031 346

## Beschreibung

Die Erfindung betrifft einen Beschlag für einen Fahrzeugsitz, insbesondere für einen Kraftfahrzeugsitz, mit einem ersten Beschlagteil, einem mit dem ersten Beschlagteil in Getriebeverbindung stehenden zweiten Beschlagteil, und einem mehrteiligen, im ersten Beschlagteil drehbar gelagerten Exzenter zum Antrieb einer Abwälzbewegung von erstem Beschlagteil und zweitem Beschlagteil aneinander, wobei der Exzenter als Bestandteile wenigstens einen Mitnehmer und Keilsegmente umfasst und zur Lagerung des Exzenters die Bestandteile mit ihrer Innenseite und/oder ihrer Außenseite jeweils an einem der Beschlagteile wenigstens indirekt anliegen.

Bei einem aus der DE 44 36 101 A1 bekannten Beschlag dieser Art sitzen die Keilsegmente radial innen direkt auf einem Kragenzug des ersten Beschlagteils, während sie radial außen an einem Gleitlager anliegen, welches als eine in das zweite Beschlagteil eingepresste Gleitlagerbuchse (z.B. ein Bronze-PTFE-Gleitlager) ausgebildet ist. Die Haftreibung radial innen aufgrund der Materialpaarung Stahl auf Stahl trägt zur Ablaufsicherheit des Beschlags bei. Wenn der Beschlag angetrieben wird, bewegen sich die Keilsegmente mit geringer Gleitreibung am Gleitlager des zweiten Beschlagteils entlang. Bei weiteren Beschlägen dieser Art, die aus der DE 199 38 666 A1 und der DE 101 44 840 A1 bekannt sind und einen zweiteilig ausgebildeten Mitnehmer aufweisen, sitzen die Keilsegmenten auf einem Mitnehmerring des Mitnehmers, wobei der Mitnehmerring wiederum auf dem besagten Kragenzug gelagert ist.

Die DE 197 29 562 A1, die alle Merkmale des oberbegriffs der Ansprüche 1 and 2 aufweist, offenbart einen bekannten Beschlag der eingangs genannten Art, dessen Keilsegmente ebenfalls auf ihrer Außenseite in einem gesondert ausgebildeten, buchsenförmigen Gleitlager gelagert sind, welches wiederum im zweiten Beschlagteil sitzt. Die Keilsegmente sind mit Gleitlack beschichtet und vorteilhafterweise auch mit einer Schmierung samt PD-Additiv versehen, wodurch auch ohne das spezielle Bronze-PTFE-Gleitlager niedrige Gleitwerte erreicht werden. Die Verwendung eines nicht-speziellen Gleitlagers reduziert die Herstellungskosten.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 und durch einen Beschlag mit den Merkmalen des Anspruches 2 gelöst. Vorteilhafte Ausgestaltungen sind Gegenstand der Unteransprüche.

Dadurch, dass der direkt am Beschlagteil gelagerte Bestandteil des Exzenters auf seiner Innenseite und/oder seiner Außenseite oder das zugeordnete Beschlagteil in dem mit den Bestandteil durch direkte Anlage direkt zusammenwirkenden, angeformten Bereich, mit einer dünnen Schicht beschichtet ist, welche einen gegenüber dem Material des (metallischen) Bestandteils geringeren Reibwert aufweist, kann die Reibung an zwei zusammenwirkenden Flächen gezielt verringert werden, womit sich der Wirkungsgrad des Beschlags verbessert. Mit dieser (Gleit-)Schicht, die in den bekannten Ausführungen an den eingepressten Gleitlager (DE 44 36 101 A1, DE 199 38 666 A1, DE 10144 840 A1) oder der anliegenden Seite des besagten Bestandteils (DE 197 29 562 A1) ausgebildet wird, wird eine so geringe Reibung erreicht, dass das eingepresste Gleitlager entfallen kann, d.h. es wird ein Bauteil eingespart und Bauraum gewonnen, beispielsweise zur Erhöhung der Festigkeit. Der beschichtete oder mit der beschichteten Fläche zusammenwirkende Bestandteil des Exzenters kann auch ein (vorzugsweise metallischer) Mitnehmerring eines mehrteiligen Mitnehmers sein, der radial zwischen den Keilsegmenten und dem zugeordneten Beschlagteil angeordnet ist. Die Keilsegmente im Sinne der Erfindung müssen keine geometrisch echten Segmente sein, sondern können auch jeweils an einer Scheibe ausgebildet sein, wobei dann die beiden (exzentrischen) Scheiben axial versetzt zueinander angeordnet sind.

Sofern die Schicht an einer andernfalls stark reibenden Stelle eingesetzt wird, beispielsweise an der einem Kragenzug zugewandten Innenseite des Keilsegmentes, kann aufgrund der geringeren Reibwertschwankungsbreite die Auslegung näher zur Selbsthemmgrenze verlegt werden, ohne die Ablaufsicherheit des selbsthemmenden Beschlags zu beeinträchtigen. Wenn der Beschlag durch anderweitige Sperrelemente am Ablaufen gehindert wird, kann die Auslegung über die Selbsthemmgrenze hinweg verlegt werden.

Die Schicht ist vorzugsweise eine amorphe Kohlenstoffschicht, wie sie beispielsweise aus der US 2001/0031346 A1 bekannt ist. Prinzipiell würde eine Diamantschicht aufgrund ihrer extrem hohen Härte eine beanspruchte Oberfläche ideal vor Verschleiß schützen, aber sie kann nicht ausreichende glatt und unter industriell sinnvollen Prozessbedingungen hergestellt werden. Eine amorphe Kohlenstoffschicht ist vorzugsweise tetraedrisch vernetzt, so dass sie weitgehend die superharten Eigenschaften des Diamanten zeigt, insbesondere auf Härten zwischen 40 und 75 % der Diamanthärte eingestellt werden kann, wobei selbst gegen keramische Verschleißkörper und Verschleißpartikel ein sehr hoher Widerstand gegen Abrasivverschleiß gesichert ist. Es können Härten bis 75 GPa (entsprechend 7500 HV) eingestellt werden. In Fachkreisen werden diese amorphen Kohlenstoffschichten auch als DLC-Schichten (Diamond Like Carbon) bezeichnet.

Zugleich ist die amorphe Kohlenstoffschicht industriell in größerem Umfang herstellbar, beispielsweise mittels einer (laser-)gepulsten Vakkumbogenentladung, wobei homogene Beschichtungen von ultradünnen Schichten bis in den Mikrometerbereich herstellbar sind. Die Kohlenstoffteilchen dringen teilweise in die Oberflächenschicht des Trägermaterials ein (Subplantation), was für eine bessere, insbesondere belastbarere, Verbindung zwischen der amorphen Kohlenstoffschicht und dem Trägermaterial sorgt, als dies bei einer einfachen Ablagerung (Kondensation), z.B. von Gleitlack, der Fall wäre. Das Trägermaterial weist eine der lokalen Belastung der amorphen Kohlenstoffschicht angepasste Tragfähigkeit auf, um die hohe Härte derselben zu nutzen. Kohlenstoff ist biokompatibel und physiologisch unbedenklich.

Die amorphe Kohlenstoffschicht zeigt eine geringe Adhäsionsneigung zu anderen Werkstoffen, so dass sowohl eine Kaltaufschweißung in einer beliebigen Reibpaarung vermieden wird als auch ein sehr niedriger Reibwert resultiert, gegenüber Stahl beispielsweise etwa 10 bis 15 % des Wertes einer Reibpaarung Stahl auf Stahl. Mit speziellen Schmiermitteln ist eine weitere Reduzierung der Reibung möglich. Insgesamt ist somit der gewünschte Reibwert einstellbar.

Bei der für Getriebebeschläge bekannten Anordnung mit Beschlagteilen und Keilsegmenten dazwischen sollen die Keilsegmente zu einem Beschlagteil hin, beispielsweise zu einem Kragenzug des ersten Beschlagteils, einen höheren Reibwert und zum anderen Beschlagteil, welches herkömmlicherweise an einem Kragenzug mit einem Gleitlager versehen ist, einen niedrigeren Reibwert aufweisen. Aufgrund des einstellbaren Reibwertes sind beliebige Kombinationen von unbeschichteten Flächen und amorphen Kohlenstoffschichten möglich, welche jeweils auf den Keilsegmenten und/oder auf dem zusammenwirkenden Bereich des zugeordneten Beschlagteils ausgebildet sein können, womit das Gleitlager entfallen kann. Die entsprechenden Verhältnisse und Vorteile ergeben sich, wenn bei motorisch angetriebenen Getriebebeschlägen zusätzlich ein beweglicher Mitnehmerring zwischen den Keilsegmenten und einem der Beschlagteile als Bestandteil des Exzenters vorgesehen ist. Dann sind die amorphen Kohlenstoffschichten auf den voneinander abgewandten - und den Beschlagteilen zugewandten Seiten der Bestandteile des Exzenters und/oder auf den zusammenwirkenden Bereichen der zugeordneten Beschlagteile vorgesehen.

Die Keilsegmente (bzw. zusammenwirkenden Bereiche der Beschlagteile oder auch nur ein einziges Keilsegment) können auch außen und innen (beidseitig) eine Schicht mit sehr geringer Reibung aufweisen, d.h. jeweils deutlich unterhalb der Selbsthemmgrenze, was die Reibungsverluste beim Antreiben des Beschlags, d.h. während der Einstellbewegung reduziert, womit sich der Wirkungsgrad des Beschlags erhöht. Bei gleicher Abtriebsleistung ist somit eine geringere Antriebsleistung nötig.

Da ein beidseitig mittels geringer Reibung gelagertes Keilsegment nicht mehr selbsthemmend ist, und damit auch der Beschlag gegebenenfalls nicht mehr selbsthemmend wäre, ist wenigstens auf einer Fahrzeugsitzseite vorzugsweise eine Bremse für das besagte Keilsegment vorgesehen, welche im Ruhezustand des Beschlags das Keilsegment hält und welche beim Antrieb der Abwälzbewegung gelöst wird. Ein derartiger Beschlag ist sowohl ablaufsicher als auch günstig bezüglich des Wirkungsgrades. Auf der anderen Fahrzeugsitzseite braucht keine derartige Bremse im Beschlag vorgesehen zu sein. Eine bevorzugte Bremse ist eine Schlingfederbremse, welche ein hohes abtriebsseitiges Sperrmoment liefert, bei einer antriebsseitigen Einleitung eines Drehmomentes aber mit einem im Verhältnis zum Sperrmoment geringen Freilaufmoment mitdreht. Statt einer Schlingfederbremse kann auch ein Klemmrollenfreilauf vorgesehen sein. Die Spielfreiheit und die Festigkeit bleiben jeweils erhalten.

Die Schicht kann aber auch eine Hochleistungskunststoff-Gleitschicht sein, insbesondere PEEK-Gleitschicht (Polyetheretherketon), welche eine hohe Verschleißfestigkeit mit sehr geringen Reibwerten kombiniert. Die hochverschleißfeste, teilkristallinenHochleistungskunststoff-Gleitschicht, für welche in der Regel eine Schichtdicke im Bereich von Bruchteilen eines Millimeters (z.B. 0,3 mm) ausreicht, ist vorzugsweise auf der Außenseite der Keilsegmente vorgesehen, welche beispielsweise in bekannter Anordnung mit einem kurzen Kragenzug des zweiten Beschlagteils unter Entfall des eingepressten Gleitlagers zusammenwirken. Die Verwendung einer PTFE-Schicht (Polytetrafluorethylen, Teflon) als Gleitschicht ist ebenfalls möglich. Es sind beliebige Kombinationen von Anordnungen der Gleitschicht oder Gleitschichten bezüglich der Keilsegmente und mit der amorphen Kohlenstoffschicht möglich.

Der erfindungsgemäße Beschlag wird vorzugsweise in einem Fahrzeugsitz zur Lehnenneigungseinstellung eingesetzt, kann aber auch anderweitig verwendet werden.

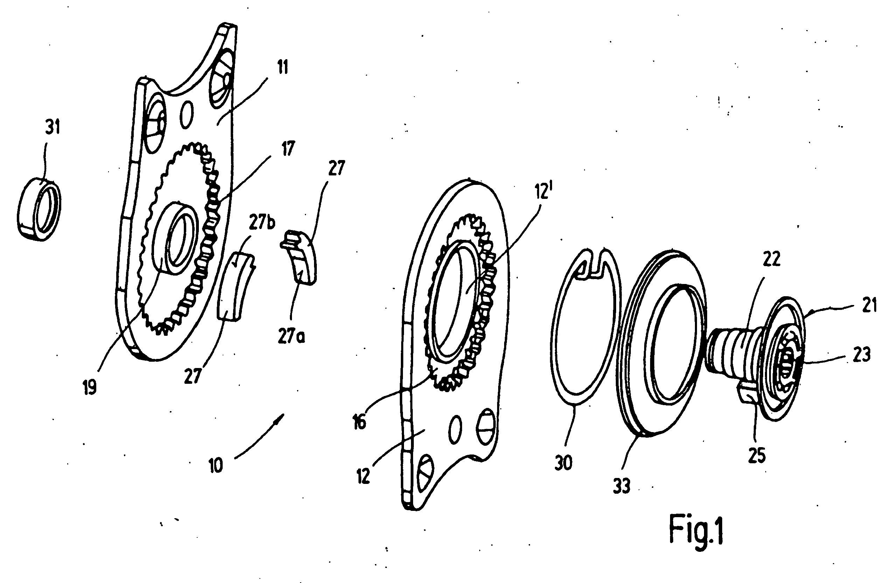

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels,

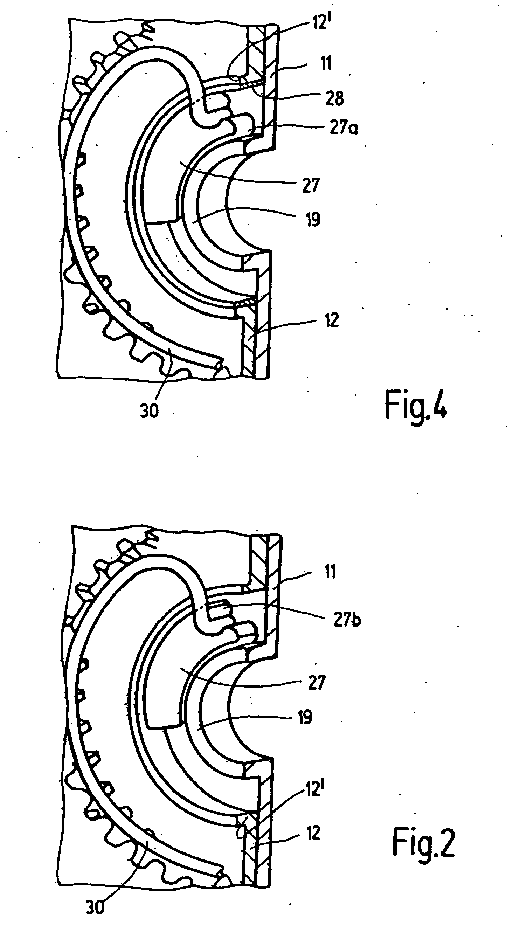

- Fig. 2: teilweise geschnittene Teilansicht des Ausführungsbeispiels,

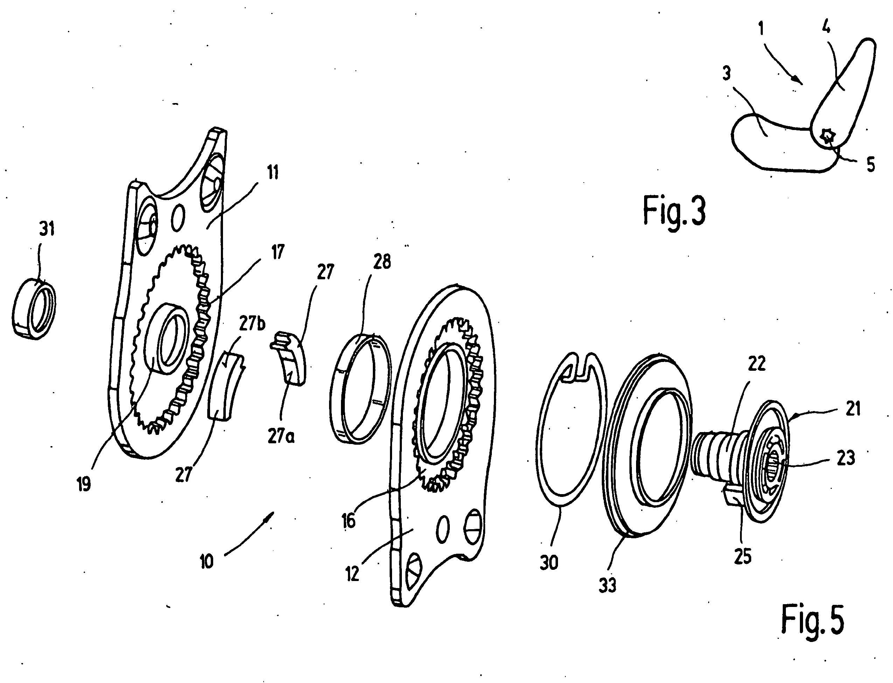

- Fig. 3: eine schematische Darstellung eines Fahrzeugsitzes
- Fig. 4: eine teilweise geschnittene Teilansicht eines bekannten Beschlags, und
- Fig. 5: eine Explosionsdarstellung des bekannten Beschlags.

Ein Fahrzeugsitz 1 für ein Kraftfahrzeug weist ein Sitzteil 3 und eine relativ zum Sitzteil 3 in ihrer Neigung einstellbare Lehne 4 auf. Ein für die Neigungseinstellung manuell zu betätigendes Handrad 5 auf einer Seite des Fahrzeugsitzes 1 dreht eine nicht näher dargestellte Antriebswelle, welche horizontal im Übergangsbereich zwischen Sitzteil 3 und Lehne 4 angeordnet ist und auf beiden Seiten des Fahrzeugsitzes 1 drehfest in je einen Beschlag 10 eingreift. Die Lehne 4 ist mittels der beiden Beschläge 10 mit dem Sitzteil 3 verbunden. Von den beiden Ausführungsbeispielen des Beschlags 10 sind zunächst die gemeinsamen Merkmale beschrieben.

Der Beschlag 10 ist als Getriebebeschlag ausgebildet, bei welchem ein erstes Beschlagteil 11 und ein zweites Beschlagteil 12 über ein als (vorzugsweise wenigstens bei einem der beiden Beschläge 10 des Fahrzeugsitzes 1 selbsthemmendes) Exzenterumlaufgetriebe ausgebildetes Getriebe zum Verstellen und Feststellen miteinander verbunden sind. Die beiden Beschlagteile 11 und 12 bestehen aus Stahl und können bereichsweise gehärtet sein. Die beiden Beschlagteile 11 und 12 weisen eine im wesentlichen flache Form auf. Das erste Beschlagteil 11 ist fest mit der das Handrad 5 und die Antriebswelle lagernden Struktur (vorliegend der Struktur der Lehne 4) verbunden, weshalb im Ausführungsbeispiel das erste Bauteil 11 lehnenfest und daher in der Zeichnung oben dargestellt ist. Entsprechend ist das zweite Beschlagteil 12 im Ausführungsbeispiel sitzteilfest, d.h. mit der Struktur des Sitzteiles 3 verbunden, und in der Zeichnung unten dargestellt. Die Positionen der Beschlagteile 11 und 12 können je nach Anforderung ausgetauscht sein.

Zur Ausbildung des Getriebes ist am zweiten Beschlagteil 12 ein Zahnrad 16 mit einer Außenverzahnung und am ersten Beschlagteil 11 ein Zahnkranz 17 mit einer Innenverzahnung ausgeprägt, welche miteinander kämmen. Der Durchmesser des Kopfkreises der Außenverzahnung des Zahnrads 16 ist um wenigstens eine Zahnhöhe kleiner als der Durchmesser des Fußkreises der Innenverzahnung des Zahnkranzes 17. Der entsprechende Unterschied der Zähneanzahl von Zahnrad 16 und Zahnkranz 17 ermöglicht eine Abwälzbewegung des Zahnkranzes 17 am Zahnrad 16.

Das erste Beschlagteil 11 weist auf der dem Zahnrad 16 zugewandten Seite konzentrisch zur Innenverzahnung des Zahnkranzes 17 einen Kragenzug 19 auf. Der Kragenzug 19 ist ein angeformter Bestandteil des ersten Beschlagteils 11, also einstückig mit diesem ausgebildet. Im Kragenzug 19 ist mit Spiel ein Mitnehmer 21 mittels eines Buchsenabschnitts 22 gelagert. Der aus Kunststoff bestehende Mitnehmer 21, durch dessen Anordnung die verwendeten Richtungsangaben definiert sind, ist zentral mit einer zu einem Keilwellenprofil der Antriebswelle passenden, axial verlaufenden Bohrung 23 versehen. Ferner weist der Mitnehmer 21 ein angeformtes Mitnehmersegment 25 auf, welches sichelförmig um einen Teil des Kragenzuges 19 herum angeordnet ist. Zwei metallische Keilsegmente 27 liegen - zur Lagerung am ersten Beschlagteils 11 - mit ihrer gekrümmten Innenseiten 27a direkt am Kragenzug 19 des ersten Beschlagteils 11 und - zur Lagerung am zweiten Beschlagteil 12 - mit ihren gekrümmten Außenseiten 27b wenigstens indirekt am zweiten Beschlagteil 12 an, welcher hierfür ebenfalls einen - wenn auch kurzen - Kragenzug 12' aufweist. Der Kragenzug 12' ist ein angeformter Bestandteil des zweiten Beschlagteils 12, also einstückig mit diesem ausgebildet. Dabei lagert das zweite Beschlagteil 12 direkt mit seinem Kragenzug 12' die Keilsegmente 27, während im Stand der Technik hierfür ein in den Kragenzug 12' eingepresstes, buchsenförmiges Gleitlager 28 vorgesehen ist.

Das Mitnehmersegment 25 fasst mit Spiel zwischen die Schmalseiten der Keilsegmente 27, während die einander zugekehrten Breitseiten der Keilsegmente 27 jeweils einen abgewinkelten Endfinger einer Feder, im folgenden als Omegafeder 30 bezeichnet, abstützen. Die Omegafeder 30 drückt die Keilsegmente 27 in Umfangsrichtung auseinander und stellt damit den Beschlag 10 im Ruhezustand spielfrei. Der Mitnehmer 21 wird auf der Außenseite des ersten Beschlagteils 11 durch einen aufgeclipsten Sicherungsring 31 axial gesichert. Ein Dichtring 33, vorzugsweise aus Gummi, deckt den Bereich zwischen der Außenseite des zweiten Beschlagteils 12 und einem als Abdeckscheibe ausgebildeten Bereich des Mitnehmers 21 ab. Zur Aufnahme der axial wirkenden Kräfte ist in an sich bekannter Weise an den beiden Beschlagteilen 11 und 12 je ein in der Zeichnung nicht dargestelltes Halteblech angeschweißt, welches das jeweils andere Beschlagteil übergreift, ohne die Einstellbewegung zu behindern.

Durch das Mitnehmersegment 25 und die Keilsegmente 27 wird ein Exzenter definiert, welcher in Verlängerung der Richtung der Exzentrizität das Zahnrad 16 und den Zahnkranz 17 an einer so definierten Eingriffsstelle ineinander drückt. Bei einem Antrieb durch die sich drehende Antriebswelle wird ein Drehmoment zunächst auf den Mitnehmer 21 und dann auf den so definierten Exzenter übertragen, welcher entlang der Innenseite des Kragenzugs 12' gleitet unter Verlagerung der Richtung der Exzentrizität und damit unter Verlagerung der Eingriffsstelle des Zahnrades 16 im Zahnkranz 17, was sich als taumelnde Abwälzbewegung der Beschlagteile 11 und 12 aneinander darstellt.

Sowohl für das Sperren des Beschlags 10 im Ruhezustand als auch für den Wirkungsgrad im Betrieb spielen die Reibungsverhältnisse eine wichtige Rolle. Es ist dabei im Stand der Technik bekannt, dass die Keilsegmente 27 auf ihrer Außenseite 27b aufgrund des Gleitlagers 28 eine deutlich kleinere Reibung erfahren als auf ihrer Innenseite 27a, wobei die Verhältnisse theoretisch auch genau umgekehrt sein könnten. Erfindungsgemäß werden nun Verbesserungen an den Reibungsverhältnissen vorgenommen.

Die Innenseite 27a der Keilsegmente 27 ist mit einer superharten, ersten amorphen Kohlenstoffschicht, vorliegend mit einer Schichtdicke im Mikrometerbereich, beschichtet. Die amorphe Kohlenstoffschicht verbindet die Härte von Diamant mit niedrigen Reibwerten, wobei die Schwankungsbreite des Reibwertes sehr gering ist. Der Reibwert der dünnen amorphen Kohlenstoffschicht ist geringer als der Reibwert des Materials der Keilsegmente 27, welche im wesentlichen aus gehärtetem Stahl oder einem Sintermaterial bestehen. Die Reibung zwischen den Keilsegmenten 27 und dem ersten Beschlagteil 11, d.h. dessen Kragenzug 19, kann dadurch - bis nahe an die Grenze der Selbsthemmung gebracht werden, welche für das Sperren des Beschlags 10 sorgt. Der Wirkungsgrad des Beschlags 10 kann mit dieser verringerten Reibung von etwa 0,3 auf knapp 0,5 erhöht werden.

Erfindungsgemäß ist - unabhängig vom Vorhandensein der ersten amorphen Kohlenstoffschicht- die Außenseite 27b der Keilsegmente 27 mit einer zweiten amorphen Kohlenstoffschicht, vorliegend mit einer Schichtdicke im Mikrometerbereich, beschichtet, deren Reibwert geringer ist als derjenige der ersten amorphen Kohlenstoffschicht und etwa so hoch wie derjenige eines aus dem Stand der Technik bekannten Gleitlagers 28 eingestellt ist. Es braucht daher kein Gleitlager 28 vorgesehen sein, da die direkte Reibung zwischen den Keilsegmenten 27 mit der zweiten amorphen Kohlenstoffschicht auf der Außenseite 27b und dem zweiten Beschlagteil 12 einen sehr kleinen Wert annimmt. Zudem kann ohne Gleitlager 28 im Crashfall keine plastische Verformung des Gleitlagers 28 als einzigem ungehärtetem Bauteil im Kraftfluss auftreten. Der durch den Entfall des Gleitlagers 28 eingesparte radiale Bauraum kann den anderen Bauteilen zugefügt werden, vorzugsweise den Keilsegmenten 27, und erhöht damit die Festigkeit des Beschlags 10 bei gleichbleibendem Gesamtbauraum.

Es sind nun verschiedene Abwandlungen möglich. So kann die erste amorphe Kohlenstoffschicht auf dem Kragenzug 19 des ersten Beschlagteils 11 statt auf den Keilsegmenten 27 aufgebracht sein. Die zweite amorphe Kohlenstoffschicht kann bei entsprechender Einstellung mit sehr geringer Reibung direkt am zweiten Beschlagteil 12 vorgesehen sein, auch unabhängig vom Vorhandensein der ersten amorphen Kohlenstoffschicht, womit jeweils ein Gleitlager 28 entfallen kann. Die Kragenzüge 12' und/oder 19 können gehärtet sein.

Es sind auch Abwandlungen denkbar, bei denen die Reibung zwischen dem ersten Beschlagteil 11 und wenigstens dem höher belasteten (aufgrund des Gewichtes der Lehne 10) Keilsegment 27 durch die erste amorphe Kohlenstoffschicht (unter Umständen deutlich) unter die Selbsthemmgrenze gebracht wird, beispielsweise durch eine beidseitige oder Rundumbeschichtung des betreffenden Keilsegmentes 27. Die Selbsthemmung des Beschlags 10 ist dann beispielsweise durch eine schaltbare Bremse, beispielsweise eine Schlingfederbremse oder ein Klemmrollenfreilauf, aufzubringen.

Es sind schließlich auf Abwandlungen möglich, bei denen der Mitnehmer 21 entsprechend der DE 199 38 666 A1, mehrteilig ausgebildet ist, d.h. einen Mitnehmerring (vorzugsweise aus dem gleichen Material wie die Keilsegmente 27) und eine Mitnehmerbuchse aus Kunststoff aufweist. Der Mitnehmerring weist dann das Mitnehmersegment 25 auf und ist in radialer Richtung zwischen den Keilsegmenten 27 und dem Kragenzug 19 des ersten Beschlagteils 11 (oder in kinematisch umgekehrter Abwandlung dem Kragenzug 12' des zweiten Beschlagteils 12) angeordnet, d.h. er liegt einerseits an den Keilsegmenten 27 und andererseits an dem zugeordneten Beschlagteil 11 (bzw. 12) an. Der Mitnehmerring als weiterer Bestandteil des Exzenters kann ebenfalls eine oder beide amorphe Kohlenstoffschichten innenseitig oder außenseitig oder beidseitig tragen und mit entsprechend beschichteten Bereichen der Keilsegmente 27 oder Beschlagteile 11 oder 12 zusammenwirken.

### Bezugszeichenliste

- 1: Fahrzeugsitz
- 3: Sitzteil
- 4: Lehne
- 5: Handrad
- 10: Beschlag
- 11: erstes Beschlagteil
- 12: zweites Beschlagteil
- 12': Kragenzug des zweiten Beschlagteils
- 16: Zahnrad
- 17: Zahnkranz
- 19: Kragenzug (des ersten Beschlagteils)
- 21: Mitnehmer
- 22: Buchsenabschnitt
- 23: Bohrung
- 25: Mitnehmersegment
- 27: Keilsegment
- 27a: Innenseite
- 27b: Außenseite
- 28: Gleitlager
- 30: Omegafeder
- 31: Sicherungsring
- 33: Dichtring

## Patentansprüche

1. Beschlag für einen Fahrzeugsitz, insbesondere für einen Kraftfahrzeugsitz, mit
a) einem ersten Beschlagteil (11),
b) einem mit dem ersten Beschlagteil (11) in Getriebeverbindung stehenden zweiten Beschlagteil (12), und
c) einem mehrteiligen, im ersten Beschlagteil (11) drehbar gelagerten Exzenter zum Antrieb einer Abwälzbewegung von erstem Beschlagteil (11) und zweitem Beschlagteil (12) aneinander,
wobei
d) der Exzenter als Bestandteile (21, 27) wenigstens einen Mitnehmer (21) und Keilsegmente (27) umfasst und zur Lagerung des Exzenters die Bestandteile (21, 27) mit ihrer Innenseite (27a) und/oder ihrer Außenseite (27b) jeweils an einem der Beschlagteile (11 bzw. 12) wenigstens indirekt anliegen, **dadurch gekennzeichnet, dass**
e) wenigstens ein Bestandteil (27) des Exzenters mit seiner Außenseite (27b) am zweiten Beschlagteil (12) gelagert.ist und direkt mit dem zweiten Beschlagteil (12) zusammenwirkt, indem der Bestandteil (27) des Exzenters mit seiner Außenseite (27b) jeweils direkt und frei von eingepressten Gleit- oder Wälzlagern an einem angeformten Bestandteil, insbesondere einem Kragenzug (12'), des zweiten Beschlagteils (12) anliegt, und
f) der besagte Bestandteil (27) des Exzenters oder das zugeordnete Beschlagteil (11 bzw. 12) in dem direkt zusammenwirkenden Bereich mit einer dünnen Schicht beschichtet ist, welche einen gegenüber dem Material des Bestandteils (27) geringeren Reibwert aufweist.

2. Beschlag für einen Fahrzeugsitz, insbesondere für einen Kraftfahrzeugsitz, mit
a) einem ersten Beschlagteil (11),
b) einem mit dem ersten Beschlagteil (11) in Getriebeverbindung stehenden zweiten Beschlagteil (12), und
c) einem mehrteiligen, im ersten Beschlagteil (11) drehbar gelagerten Exzenter zum Antrieb einer Abwälzbewegung von erstem Beschlagteil (11) und zweitem Beschlagteil (12) aneinander,
wobei
d) der Exzenter als Bestandteile (21, 27) wenigstens einen Mitnehmer (21) und Keilsegmente (27) umfasst und zur Lagerung des Exzenters die Bestandteile (21, 27) mit ihrer Innenseite (27a) und/oder ihrer Außenseite (27b) jeweils an einem der Beschlagteile (11 bzw. 12) wenigstens indirekt anliegen, **dadurch gekennzeichnet, dass**
e) wenigstens ein Bestandteil (27) des Exzenters mit seiner Innenseite (27a) am ersten Beschlagteil (11) gelagert ist und direkt mit dem ersten Beschlagteil (11) zusammenwirkt, indem der Bestandteil (27) des Exzenters mit seiner Innenseite (27a) direkt und frei von eingepressten Gleit- oder Wälzlagern an einem angeformten Bestandteil, insbesondere einem Kragenzug (19), des ersten Beschlagteils (11) anliegt, und
f) der besagte Bestandteil (27) des Exzenters oder das zugeordnete Beschlagteil (11 bzw. 12) in dem direkt zusammenwirkenden Bereich mit einer dünnen Schicht beschichtet ist, welche einen gegenüber dem Material des Bestandteils (27) geringeren Reibwert aufweist.

3. Beschlag nach einem der vorhergehenden Ansprüche, **dadurch gekennzeichnet, dass** die Bestandteile (27) des Exzenters auf den voneinander abgewandten Seiten (27a, 27b) oder die zugeordneten Beschlagteile (11 bzw. 12) in den mit den Bestandteilen (27) zusammenwirkenden Bereich jeweils mit einer dünnen Schicht beschichtet sind, welche einen gegenüber dem Material des Bestandteils (27) geringeren Reibwert aufweist.

4. Beschlag nach einem der vorhergehenden Ansprüche, **dadurch gekennzeichnet, dass** die dünne Schicht eine amorphe Kohlenstoffschicht ist, welche insbesondere tetraedrisch vernetzt ist.

5. Beschlag nach Anspruch 4, **dadurch gekennzeichnet, dass** die amorphe Kohlenstoffschicht eine Schichtdicke im Mikrometerbereich oder geringer aufweist.

6. Beschlag nach Anspruch 4 oder 5, **dadurch gekennzeichnet, dass** der Bestandteil (27) des Exzenters auf seiner Innenseite (27a) oder das zugeordnete Beschlagteil (11) in dem mit dem Bestandteil (27) zusammenwirkenden Bereich eine erste amorphe Kohlenstoffschicht und der oder ein weiterer Bestandteil (27) des Exzenters auf seiner Außenseite (27b) oder das zugeordnete Beschlagteil (12) in dem mit dem Bestandteil (27) zusammenwirkenden Bereich eine zweite amorphe Kohlenstoffschicht aufweist.

7. Beschlag nach Anspruch 6, **dadurch gekennzeichnet, dass** die beiden amorphen Kohlenstoffschichten unterschiedliche Reibwerte aufweisen.

8. Beschlag nach einem der vorhergehenden Ansprüche, **dadurch gekennzeichnet, dass** der Mitnehmer (21) mehrteilig ausgebildet ist und einen Mitnehmerring als Bestandteil des Exzenters aufweist, welcher einerseits an den Keilsegmenten (27) und anderseits am zugeordneten Beschlagteil (11 bzw. 12) anliegt.

9. Beschlag nach einem der vorhergehenden Ansprüche, **dadurch gekennzeichnet, dass** die Keilsegmente (27) und/oder der Mitnehmerring im wesentlichen aus gehärtetem Stahl oder einem Sintermaterial bestehen.

10. Beschlag nach einem der vorhergehenden Ansprüche, **dadurch gekennzeichnet, dass** die dünne Schicht eine Hochleistungskunststoff-Gleitschicht, insbesondere aus PEEK, und/oder eine PTFE-Gleitschicht ist.

11. Fahrzeugsitz, insbesondere Kraftfahrzeugsitz, mit einem Sitzteil (3) und einer relativ zum Sitzteil (3) in ihrer Neigung einstellbaren Lehne (4), welche auf wenigstens einer Seite des Fahrzeugsitzes (1) mittels eines Beschlags (10) nach einem der vorhergehenden Ansprüche am Sitzteil (3) angebracht ist.

## Claims

1. A fitting for a vehicle seat, in particular for a motor vehicle seat, with
a) a first fitting part (11),
b) a second fitting part (12) in geared connection with the first fitting part (11), and
c) a multi-part eccentric which is mounted rotatably in the first fitting part (11) and is intended for driving a rolling movement of first fitting part (11) and second fitting part (12) on each other,
wherein
d) the eccentric comprises, as components (21, 27), at least one driver (21) and wedge segments (27) and, for the mounting of the eccentric, the components (21, 27) bearing at least indirectly by means of their inner side (27a) and/or their outer side (27b) in each case against one of the fitting parts (11 or 12),
**characterized in that**
e) at least one component (27) of the eccentric is mounted with its outer side (27b) on the second fitting part (12) and interacting directly with the second fitting part (12), as the component (27) of the eccentric bears, by means of its outer side (27b), against an integrally formed component, in particular a collar formation (12') of the second fitting part (12), directly and free from pressed-in slide bearings or rolling bearings, and
f) said component (27) of the eccentric or the associated fitting part (11 and/or 12), in the interacting region, is coated with a thin layer which has a lower coefficient of friction than the material of the component (27).

2. A fitting for a vehicle seat, in particular for a motor vehicle seat, with
a) a first fitting part (11),
b) a second fitting part (12) in geared connection with the first fitting part (11), and
c) a multi-part eccentric which is mounted rotatably in the first fitting part (11) and is intended for driving a rolling movement of first fitting part (11) and second fitting part (12) on each other,
wherein
d) the eccentric comprises, as components (21, 27), at least one driver (21) and wedge segments (27) and, for the mounting of the eccentric, the components (21, 27) bearing at least indirectly by means of their inner side (27a) and/or their outer side (27b) in each case against one of the fitting parts (11 or 12),
**characterized in that**
e) at least one component (27) of the eccentric is mounted with its inner side (27a) on the first fitting part (11) and interacting directly with the first fitting part (11), as the component (27) of the eccentric bears, by means of its inner side (27a), against an integrally formed component, in particular a collar formation (19) of the first fitting part (11), directly and free from pressed-in slide bearings or rolling bearings, and
f) said component (27) of the eccentric or the associated fitting part (11 and/or 12), in the interacting region, is coated with a thin layer which has a lower coefficient of friction than the material of the component (27).

3. The fitting as claimed in one of the preceding claims, **characterized in that** the components (27) of the eccentric are coated on the sides (27a, 27b) which face away from each other or on the associated fitting parts (11 and/or 12), in the region interacting with the components (27), with a thin layer which has a lower coefficient of friction than the material of the component (27).

4. The fitting as claimed in one of the preceding claims, **characterized in that** the thin layer is an amorphous carbon layer which, in particular, is crosslinked tetrahedrically.

5. The fitting as claimed in claim 4, **characterized in that** the amorphous carbon layer has a layer thickness in the micrometer range or less.

6. The fitting as claimed in claim 4 or 5, **characterized in that** the component (27) of the eccentric has, on its inner side (27a), or the associated fitting part (11), in the region interacting with the component (27), has a first amorphous carbon layer, and the component or a further component (27) of the eccentric has, on its outer side (27b), or the associated fitting part (12) has, in the region interacting with the component (27), a second amorphous carbon layer.

7. The fitting as claimed in claim 6, **characterized in that** the two amorphous carbon layers have different coefficients of friction.

8. The fitting as claimed in one of the preceding claims, **characterized in that** the driver (21) is of multi-part design and has a driving ring as a component of the eccentric, which driving ring bears, on the one hand, against the wedge segments (27) and, on the other hand, against the associated fitting part (11 or 12).

9. The fitting as claimed in one of the preceding claims, **characterized in that** the wedge segments (27) and/or the driving ring are essentially composed of hardened steel or a sintered material.

10. The fitting as claimed in one of the preceding claims, **characterized in that** the thin layer is a sliding layer of high-performance plastic, in particular of PEEK, and/or is a PTFE sliding layer.

11. A vehicle seat, in particular motor vehicle seat, with a seat part (3) and a backrest (4) which can be adjusted in its inclination relative to the seat part (3) and is attached to the seat part (3) on at least one side of the vehicle seat (1) by means of a fitting (10) as claimed in one of the preceding claims.

## Revendications

1. - Armature pour un siège de véhicule, en particulier pour un siège de véhicule automobile, avec :
a) une première partie d'armature (11) ;
b) une deuxième partie d'armature (12) se trouvant dans une liaison engrenée avec la première partie d'armature (11) ; et
c) un excentrique en plusieurs parties, monté rotatif dans la première partie d'armature (11), destiné à entraîner un mouvement de développement entre la première partie d'armature (11) et la deuxième partie d'armature (12) ;
dans laquelle :
d) l'excentrique comprend comme parties constitutives (21, 27) au moins un entraîneur (21) et des segments de clavette (27) et, afin de supporter l'excentrique, les parties constitutives (21, 27) reposent chacune au moins indirectement par leur côté intérieur (27a) et/ou leur côté extérieur (27b) contre l'une des parties d'armature (11 ou 12) ;
**caractérisée par le fait que** :
e) au moins une partie constitutive (27) de l'excentrique repose par son côté extérieur (27b) sur la deuxième partie d'armature (12) et coopère directement avec la deuxième partie d'armature (12) du fait que la partie constitutive (27) de l'excentrique reposant par son côté extérieur (27b) directement et sans paliers lisses ou roulements montés en force sur une partie constitutive surmoulée, en particulier un collet (12'), de la deuxième partie d'armature (12) ; et
f) ladite partie constitutive (27) de l'excentrique ou la partie d'armature associée (11 ou 12) est revêtue dans la zone de coopération directe d'une couche mince qui présente un coefficient de frottement inférieur au matériau de la partie constitutive (27).

2. - Armature pour un siège de véhicule, en particulier pour un siège de véhicule automobile, avec :
a) une première partie d'armature (11) ;
b) une deuxième partie d'armature (12) se trouvant dans une liaison engrenée avec la première partie d'armature (11) ; et
c) un excentrique en plusieurs parties, monté rotatif dans la première partie d'armature (11), destiné à entraîner un mouvement de développement entre la première partie d'armature (11) et la deuxième partie d'armature (12) ;
dans laquelle :
d) l'excentrique comprend comme parties constitutives (21, 27) au moins un entraîneur (21) et des segments de clavette (27) et, afin de supporter l'excentrique, les parties constitutives (21, 27) reposent chacune au moins indirectement par leur côté intérieur (27a) et/ou leur côté extérieur (27b) contre l'une des parties d'armature (11 ou 12) ;
**caractérisée par le fait que** :
e) au moins une partie constitutive (27) de l'excentrique repose par son côté intérieur (27a) sur la première partie d'armature (11) et coopère directement avec la première partie d'armature (11) du fait que la partie constitutive (27) de l'excentrique repose par son côté intérieur (27a) directement et sans paliers lisses ou roulements montés en force sur une partie constitutive surmoulée, en particulier un collet (19), de la première partie d'armature (11) ; et
f) ladite partie constitutive (27) de l'excentrique ou la partie d'armature associée (11 ou 12) est revêtue dans la zone de coopération directe d'une couche mince qui présente un coefficient de frottement inférieur au matériau de la partie constitutive (27).

3. - Armature selon l'une des revendications précédentes, **caractérisée par le fait que** les parties constitutives (27) de l'excentrique sont revêtues chacune sur les côtés (27a, 27b) opposés l'un à l'autre ou les parties d'armature (11 ou 12) associées sont revêtues chacune dans la zone qui coopère avec les parties constitutives (27) par une couche mince qui présente un coefficient de frottement inférieur au matériau de la partie constitutive (27).

4. - Armature selon l'une des revendications précédentes, **caractérisée par le fait que** la couche mince est une couche de carbone amorphe qui est en particulier réticulée de manière tétraédrique.

5. - Armature selon la revendication 4, **caractérisée par le fait que** la couche de carbone amorphe possède une épaisseur de couche de l'ordre du micromètre ou moins.

6. - Armature selon l'une des revendications 4 ou 5, **caractérisée par le fait que** la partie constitutive (27) de l'excentrique, sur son côté intérieur (27a), ou la partie d'armature (11) associée, dans la zone qui coopère avec la partie constitutive (27), possède une première couche de carbone amorphe, et que la partie constitutive (27), ou une autre, de l'excentrique, sur son côté extérieur (27b), ou la partie d'armature (12) associée, dans la zone qui coopère avec la partie constitutive (27), possède une deuxième couche de carbone amorphe.

7. - Armature selon la revendication 6, **caractérisée par le fait que** les deux couches de carbone amorphe possèdent des coefficients de frottement différents.

8. - Armature selon l'une des revendications précédentes, **caractérisée par le fait que** l'entraîneur (21) est fait de plusieurs parties et possède un anneau d'entraînement formant une partie constitutive de l'excentrique qui repose d'une part sur les segments de clavette (27) et d'autre part sur la partie d'armature (11 ou 12) associée.

9. - Armature selon l'une des revendications précédentes, **caractérisée par le fait que** les segments de clavette (27) et/ou l'anneau d'entraînement se composent essentiellement d'acier trempé ou d'un matériau fritté.

10. - Armature selon l'une des revendications précédentes, **caractérisée par le fait que** la couche mince est une couche de glissement en matière plastique à hautes performances, en particulier en PEEK, et/ou une couche de glissement en PTFE.

11. - Siège de véhicule, en particulier siège de véhicule automobile, avec une partie d'assise (3) et un dossier (4) qui est réglable dans son inclinaison par rapport à la partie d'assise (3) et qui est fixé sur la partie d'assise (3), au moins sur un côté du siège de véhicule (1), à l'aide d'une armature (10) telle que définie à l'une des revendications précédentes.
